# EUROPEAN PATENT SPECIFICATION

(11) **EP 2 451 231 B1**
(45) Date of publication and mention of the grant of the patent: **13.09.2017**
(21) Application number: 10189965.6
(22) Date of filing: 04.11.2010
(51) Int. Cl.: H04W 72/04, H04L 5/00

(54) **Improved common control channel operation**
Verbesserter Betrieb von gemeinsamen Kanälen
Fonctionnement amélioré de canal de commande commun

(43) Date of publication of application: 09.05.2012
(73) Proprietor: Airbus Defence and Space Oy, 00380 Helsinki (FI)
(72) Inventor: Räsänen, Pasi, 40900, Säynätsalo (FI); Huovinen, Lasse, 02130, Espoo (FI)
(74) Representative: Kolster Oy Ab

(56) References cited:
- WO-A1-96/25807
- WO-A1-2010/112086
- GB-A- 2 424 799
- US-A- 5 778 318

## Description

### FIELD OF THE INVENTION

The present invention relates to telecommunications and especially to telecommunications systems where signalling messages between mobile nodes and network nodes may be exchanged via a common control channel.

### BACKGROUND ART

Mobile communications systems applying time-divisioned multiple access (TDMA) provide common control channels by means of which the infrastructure controls its mobile node population. The frequency of the main carrier for a cell is broadcast by the infrastructure, and the main common control channel is located on one or more defined timeslots of the main carrier. Mobile nodes that are not in an assigned channel communicate with the infrastructure sharing the common control channel. Specification of the length for the common control channel is a complicated task where mutually contradicting requirements and disadvantages need to be taken into consideration.

GB 2424799 discloses a processor for use in a fixed infrastructure of a communication system, like TETRA, the communication system including also a plurality of mobile stations each operable to request on a control channel by a random access procedure access to a shared communication resource of the system, the processor being operable to adjust dynamically, according to a detected demand as measured by a number of collisions occurring in a given period of time, a number of random access opportunities (i.e. time slots) available to the mobile stations to make requests for access to the shared resource by the random access procedure.

US 5778308 discloses a method for allocating control channels in a radio system having base stations and subscriber stations communicating with respective ones of the base stations on control and traffic channels. To make the control channel operation more efficient and to avoid interference, traffic channels are allocated in US 5778308 for control channel use so as to distribute the control channel operation between a greater number of channels, the channels allocated for control channel use being indicated to the subscriber stations for random access and control channel operation is performed on the control channels allocated in a distributed manner.

If the common control channel is narrow, the mobile node does not need to listen all timeslots of frames while on common control channel. This is good from the battery economy point of view and the terminal has time enough to perform neighbour cell scanning type of tasks, too. However, the drawback is that if there are many mobile nodes on the common control channel and they start to receive or transmit signalling at the same time, the common control channel may easily become congested. Especially long messages are problematic since their transmission is divided into several consecutive common control channel timeslots. The consecutive transmissions create congestion to other signalling messages competing of the same resources.

If the common control channel is wide, there is much more capacity for common control channel signalling, and the above congestion and delay problems can be avoided. However, in such configurations the mobile node must continuously listen to several timeslots in the main carrier, even in the case it is not really receiving anything. This is not good for battery life and may cause problems in neighbouring cell scanning and monitoring, too.

### SUMMARY

Aspects of the invention provide improved use of capacity for transmission of common control channel signalling messages, and are defined in claims comprising an independent method claim, an independent communication system claim, and a claim for an inter-related computer program product. Preferred embodiments of the invention are disclosed in the dependent claims. Further advantages are discussed in more detail with respective embodiments of the invention.

### BRIEF DESCRIPTION OF THE DRAWINGS

In the following, embodiments will be described in greater detail with reference to accompanying drawings, in which
Figure 1 illustrates elements of a telecommunications system;
Figure 2 illustrates a typical one-slot common control channel arrangement:
Figure 3 illustrates an enhanced common control channel arrangement:
Figure 4 illustrates an enhanced arrangement with larger resource requirement;
Figure 5 illustrates a prior art arrangement in a direct access context;
Figure 6 illustrates an enhanced arrangement in a direct access context;
Figure 7 illustrates BS and MS methods in the arrangement of Figure 3;
Figure 8 illustrates BS and MS methods in an alternative use case;
Figure 9 shows a block diagram illustrating an exemplary architecture for an embodiment of a communication apparatus.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may be combined to provide other embodiments.

In the following, different embodiments will be described with one example of system architecture of a telecommunications system without, however, restricting the invention to the disclosed exact terms and structures. The invention is applicable to any telecommunications system where a network node and a mobile node exchange signalling messages via a common control channel of a frame-based radio interface. A variety of system configurations applying a variety of communications technologies may be used separately or in combinations to implement the embodiments of the invention. Communications systems and technologies evolve continuously, and embodiments of the invention may require a number of modifications that are basically obvious for a person skilled in the art. Therefore all words and expressions of this specification should be interpreted broadly, as they are intended merely to illustrate, not to restrict, the embodiments.

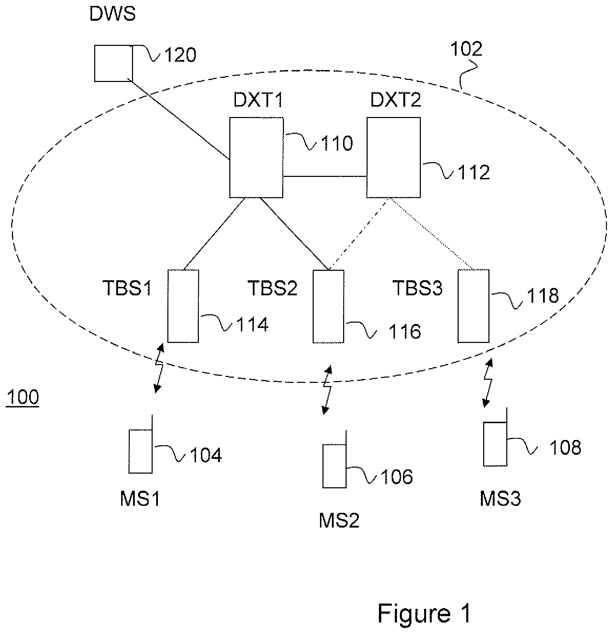

In Figure 1 the principles of the telecommunications system are described by means of a mobile communications system applying Terrestrial Trunked Radio (TETRA) technology, without limiting the invention to this one radio system technology. The description uses terms and elements of the TETRA air interface as specified in the European Telecommunication Standards ETSI EN 300 392-2; European Standard (Telecommunications series); Terrestrial Trunked Radio (TETRA); Voice plus Data (V+D); Part 2: Air Interface (AI), and ETSI TR 102 580; Terrestrial Trunked Radio (TETRA); Release 2; Designer's Guide; TETRA High-Speed Data (HSD); TETRA Enhanced Data Service (TEDS).

The telecommunications system 100 comprises a switching and management infrastructure (SwMI) 102 and one or more mobile nodes (MS) 104, 106, 108. SwMI 102 is equipment for a voice plus data (V+D) network, which enables mobile nodes to communicate with each other. In Figure 1 SwMI is illustrated with network nodes including some digital exchanges (DXT) 110, 112, and base stations (TBS) 114, 116, 118. The number of network node elements and their mutual interconnections in SwMI may vary according to the implementation.

A mobile station (MS) 104,108 106, represents here a mobile node. The mobile node may be addressed with one subscriber identity, which may be an individual subscriber identity or a group subscriber identity. A mobile node or mobile station is typically a user terminal arranged to access SwMI via a radio interface provided by SwMI. A communications system may comprise also other types of user terminals that apply other types of interfaces. For example, a TETRA dispatching workstation DWS 120 may communicate with SwMI 102 through a dispatching interface that applies, for example, E1, ISDN BA, or IP protocols. Additionally, SwMI 102 may provide one or more interfaces for interconnection with user terminals in other networks, such as PSTN, GSM, WCDMA, conventional analog networks, LAN, WAN, and similar. The various protocols related to different interfaces are implementation specific arrangements well known from the prior art.

SwMI 102 may provide users with circuit mode calls and delivery of short data messages and Internet Protocol (IP) packet data. IP packet data may be used by applications running directly within the mobile station or by external data terminals (not shown) that may be connected with the mobile station, for example via a Peripheral Equipment Interface (PEI) defined in TETRA standards.

TETRA technology, as such, is extensively documented and well known to a person skilled in the art. In the present example, a TETRA mobile station (MS) is formed by terminal equipment that implements TETRA air interface communications, and any type of subscriber identification element that associates the terminal equipment to its present user. A TETRA base station (TBS) represents here a SwMI network node that is responsible for radio transmission and reception to or from the mobile stations. TETRA base station is connected to a TETRA Digital Exchange (DXT) that represents here a controller element that monitors the operations in the telecommunications system and facilitates delivery of information between base stations, thus enabling communications between mobile stations under these base stations. DXT is typically an aggregate of traffic carrying devices, switching stages, controlling and signalling means and other functional units, which enables subscriber lines, telecommunication circuits and/or other functional units to be interconnected for communications between individual users. In other network configurations, the control functions discussed in the following may be implemented in one or more other type of controlling elements.

For transferring uplink frames from the mobile station to the base station and corresponding downlink frames from the base station to the mobile station, a telecommunications system 100 applies a frame-based radio interface. The frame-based radio interface refers here to a radio interface where a frame comprises a defined number of timeslots, and a channel between the mobile station and the base station comprises defined one or more timeslots in uplink frames and the same defined one or more timeslots in the corresponding downlink frames. The frame-based radio interface applies also common control channels. A common control channel is typically in one or more defined timeslots of a frame in a defined carrier (main carrier), and the one or more timeslots of the common control channel may be shared by mobile stations under the base station.

The frame-based radio interface access scheme of TETRA is TDMA with 4 physical channels per carrier. The European Telecommunications Standards Institute (ETSI) standard EN 300 392-2 V3.2.1 was the first version of a TETRA standard that incorporated also a High-Speed Data (HSD) enhancement, generally referred to as "TEDS" or TETRA Enhanced Data Service. This incorporation resulted in definitions for an enhanced air interface known as the TETRA Release 2 air interface. As a measure of integration, the 4-slot TDMA access structure of the original air interface plus its TDMA frames, timeslots and subslots is preserved in the enhanced air interface. The enhanced air interface employs additional modulations and channel codings, various coding rates and channel bandwidths. The modulation schemes of the enhanced air interface channels apply 4-, 16- and 64-QAM (Quadrature Amplitude Modulation), so the channels of the enhanced TETRA air interface are typically referred to as QAM channels.

Mobile communications systems provide common control channels that the infrastructure uses to control the mobile station population. During operations, a mobile station monitors a common control channel of a base station and through that exchanges messages needed for essential operations of the system, like registering to the system, initiating connections for voice calls or for packet data transfer, or paging of the mobile station for incoming voice calls or packet data traffic. In base station cells, one carrier is defined as a main carrier frequency. The frequency of the main carrier for the cell is broadcast by the infrastructure, and a main common control channel is located in the main carrier of the base station.

In TETRA documentation Conventional Access (CA) typically refers to a conventional method of operation in which the main carrier is a phase modulation carrier (MCCH). Direct Access (DA) refers to a method of operation in which the main carrier is a QAM carrier (MCCH-Q). Main common control channel modes of operation thus comprise a Conventional Access (CA) mode and a Direct Access (DA) mode. In DA mode, a DA cell uses a QAM carrier as the main carrier. The bandwidth of the DA main carrier MCCH-Q may be 25 kHz, 50 kHz, 100 kHz or 150 kHz, and it may occupy one, two, three or four timeslots per TDMA frame. If a base station needs more than one timeslot for common control, it may use either a multi-slot MCCH-Q or multiple single-slot QAM common control channels. When a DA mobile station is camped on a DA cell, it receives the QAM common control channel MCCH-Q until it is directed by the base station to an assigned channel. An assigned channel may be a QAM, π/4-DQPSK or D8PSK channel, and may be either a single-slot or a multi-slot channel.

As discussed above, selection of the size for the common control channel is a complicated task, and it has become topical in TETRA in the course of specifying access structures for the HSD enhancement. If the common control channel is only one timeslot wide, mobile stations in common mode do not need to listen all timeslots of main carrier frames. This is good from the battery economy point of view and it leaves time enough for the mobile stations to perform neighbour cell scanning type of tasks. However, a narrow common control channel becomes easily crowded. This is the case especially in TETRA systems where short data service messages may be sent on the common control channel, and these messages are intensively used by users and user applications. Long messages are specifically problematic since their transmission is typically divided into several consecutive common control channel timeslots. The consecutive transmissions create congestion to other signalling messages competing of the same resources. In addition, delivering a long message in short divided transmissions takes quite a lot of time. This delay could be avoided if the common control channel comprised more than one timeslot.

On the other hand, if the common control channel is four timeslots wide, there is much more capacity for common control channel signalling, and the above congestion and delay problems could be avoided. However, in such configuration the terminal must continuously listen to all four timeslots; even in the case it is not really receiving anything. This is not good for battery life and may cause problems in neighbouring cell scanning and monitoring etc. Even any intermediate lengths (two-slot, three-slot) have not been considered to allow generically optimal air interface resource utilization, they do not adequately avoid these ambiguous disadvantages of one- or multi-slot common control channel configurations.

In TETRA CA, one-slot common control channel is applied, which means that in some implementations, continuous measures against disadvantages from common control channel congestion need to be taken.

On the other hand, in DA the advantages of robust message transportation capability have slightly prevailed and presently the option of a four-slot MCCH-Q, and implementations thereof are widely discussed for DA. For example, European Telecommunications Standards Institute (ETSI) document EPT WG409091 r2 notes that one possible option would be to use a four-slot MCCH-Q for DA, with a four-slot assigned channel overlaid. Then all the mobile stations would use the four-slot channel, changing mode from common mode to assigned mode when they use the QAM channel as a PDCH. In order to avoid disadvantages associated with the four-slot mode, the ETSI document proposes some possible methods for allowing a DA mobile station on a multi-slot MCCH-Q to receive only one timeslot per TDMA frame when it is not active. More specifically the document discusses how MSs in common mode may request to use energy economy mode in such a way that when not active, the MS in four-slot MCCH-Q may sleep for some TDMA frames and then receive in only one timeslot of the awake TDMA frame.

However, even if there would exist good and valid mechanisms that would allow individual mobile stations to adjust their usage of MCCH-Q, it is obvious that they are implementation-specific and depend on the availability of the proposed system or device capabilities. For example, the suggested mechanism requires use of energy economy mode and some further tailored capabilities in the mobile station. It is not obvious that all systems and devices provide these optional features, which leaves systems and/or devices not supporting these features acutely vulnerable to the disadvantages associated to the multi-slot common control channel use. On the other hand, introducing system features that make earlier optional features mandatory is not considered viable, considering the significant installed base of TETRA systems.

It is now suggested that these mutually conflicting advantages and disadvantages are meshed in an arrangement by means of which it is possible alleviate problems of either of the selections. The configuration applies ubiquitously a basic common control channel that does not extend to the whole length of the timeslot. By this it avoids disadvantages of the multi-slot common control channels. Congestion of this basic common control channel resource is avoided by an improved reserved access mechanism where the base station checks the resources needed for the reserved access, and if it detects that the capacity available in the basic common control channel is not adequate for the required transmissions, it reserves an extended resource for the reserved access. The extended resource comprises the timeslots of the common control channel and successive timeslots following the common control channel in a succession of uplink frames of the main carrier. This arrangement provides a temporarily widened common control channel for a specific transmission need, and transmissions of long signalling messages do not congest the common control channel as much as before. Furthermore, the common control channel signalling messages are also transmitted quicker than before.

It is noted that the proposed arrangement applies reserved access, in which the mobile station is not assigned to another channel, but remains in common control channel mode and transmits and receives in the same frames where the normal common control channel is carried. This way the transmissions may apply the reserved access principles already specified for the common control channel signalling, and substantially none of the specified mechanisms of the common control channel signalling need to be changed. This is a very important aspect for systems where specifications are extensive and installed base of systems is very wide.

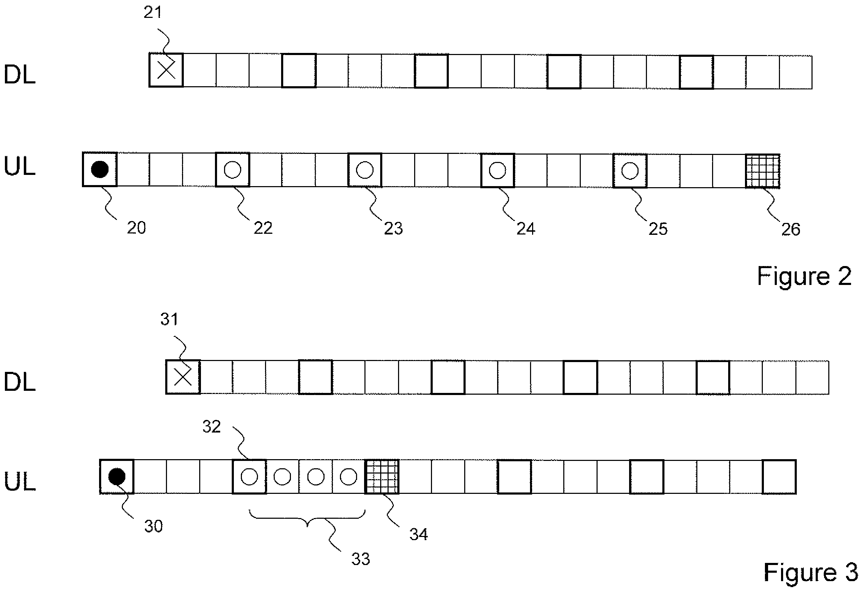

Figures 2 and 3 illustrate the use of common control channels with TETRA TDMA (time-division multiple access) frames in the main carrier, exchanged in the radio interface between a mobile station and a base station. In TETRA systems, one pair of uplink and downlink radio frequencies is used to carry the main common control channel. A carrier formed by these frequencies is known as the main carrier. Each frame comprises four timeslots and successively follow one another in a succession of frames. In the configuration of Figures 2 and 3, the first timeslot of the main carrier in both directions comprises the main common control channel (MCCH). It is noted that even if the main common control channel arrangement of Figures 2 and 3 by far resembles a typical one-slot CA configuration, the arrangements as such are basically applicable in both CA and DA systems. The acronym MCCH in this description may thus refer to MCCH used in CA or to MCCH-Q used in DA. MCCH timeslots are shown as bolded in Figures 2 and 3.

Figure 2 describes a typical one-slot common control channel arrangement for uplink transmissions. Let us assume that the mobile station has a long common control channel signalling message to send. Generally, when a mobile station wishes to initiate transaction it uses random access protocol. If it has further signalling to send after the initial access, it gives in MCCH timeslot 20 a request for reserved access. The mobile station may do this, for example, by including a reservation requirement element in an uplink MAC PDU (medium access control protocol data unit) that the mobile station uses for initial access (e.g. MAC-ACCESS PDU). The reservation requirement element may also indicate the mobile station's estimate of the capacity for transferring the signalling message it has to send. The reservation request PDU may already comprise part of the whole common control channel signalling message such that the capacity estimate tells the additional capacity required for transmitting the part of the signalling message that has not yet been transmitted from the mobile station to the base station.

When a base station receives such a reservation request, it checks the number of timeslots required for transmitting the remaining part of the original uplink signalling message. In case the reservation request did not include any part of the original signalling message to be transmitted, the remaining part of the uplink signalling message is the whole of the original signalling message to be transmitted. In the following, the remaining part of the original signalling message is referred to as the first signalling message. In TETRA the check is based on the resource indication given by the mobile station. Other mechanisms for estimating the necessary transmission resource may naturally be applied within the scope of protection. Based on the check, the base station then reserves a subslot, a timeslot or several timeslots for that particular mobile station. Reservation means here that the base station marks the uplink subslots of the reserved timeslots "reserved" in an ACCESS-ASSIGN PDU. This prevents other mobile stations from sending random accesses in those timeslots. The base station also informs the mobile station about the reserved timeslots by including a slot granting element to the PDU, for example a MAC-RESOURCE PDU it uses to signal uplink resource allocation to the mobile station.

It is possible that the first signalling message of the mobile station is so long that it exceeds the transmission capacity of the one-slot MCCH. A slot granting element is an information element of the PDU and allows the base station to grant a subslot, a timeslot or several timeslots of MCCH to the mobile station. The slot granting element also comprises a granting delay sub-element that indicates the time of the start of the reservation.

In case of CA, the base station may grant for reserved access a subslot, a timeslot or several timeslots occupying successive timeslots on MCCH (basic slot granting). In DA a base station may also grant with one slot grant disjoint resources for reserved access by including multiple instances of basic slot granting element and/or by implicit repetition of the basic slot granting element (multiple slot granting).

For example, in case of a one-slot MCCH and a six-slot first signalling message, the base station could grant the required timeslots with one multiple slot granting element by including in it a basic slot granting element with two-slot capacity allocation, an implicit repeat count of two, and a granting delay of one. This would result in reservation, where MCCH timeslots from two consecutive uplink frames are used for reserved access of a specific mobile station, MCCH of one uplink frame remains unreserved, again MCCH timeslots from two consecutive uplink frames are used for reserved access of the specific mobile station, MCCH of one uplink frame remains unreserved, and once more MCCH timeslots from two consecutive uplink frames are used for reserved access of the specific mobile station. To an extent, use of disjoint resources may reduce the blocking effect of long messages, because timeslots between the reserved access timeslots may be used by other mobile stations, for example for random access. However, in both basic and multiple slot granting schemes, a base station reserves resources for reserved access only from timeslots of MCCH. When the desire is to cope with minimum ubiquitous MCCH allocation, these mechanisms are not effective against congestion by long signalling messages.

In the case of Figures 2 and 3, let us assume that transmission of the first signalling message of the mobile station requires additional four timeslots. The base station checks the resources required for transmitting the first signalling message and detects that the capacity of the single MCCH is not enough. The base station therefore sets the capacity allocation sub-element of the basic slot granting element to four and sends the uplink resource allocation PDU 21 with slot granting flagged to the mobile station.

After receiving the slot granting element, the mobile station uses the MCCH timeslots 22, 23, 24, 25 of the next four uplink frames of the main carrier to transmitting the first signalling message to the base station. The frame of the first additional timeslot 22 depends on the granting delay sub-element of the slot granting element. In Figure 2 the reservation is set to start in the next uplink frame of MCCH, but other delays may naturally be applied, as well. After the transmissions in the MCCH timeslots of the four successive frames, the MCCH timeslot 26 of the next frame is again normally available to other MCCH use. The period between timeslots 20 and 26 corresponds with the time the common control channel is unavailable to other mobile stations.

Figure 3 describes now an enhanced arrangement for the same situation. As in Figure 2, the mobile station gives in the uplink common control channel a request 30 for reserved access. The base station checks the number of timeslots required for transmitting the first signalling message and detects that the capacity of the single MCCH is not enough. However, in this case, when the base station detects that the number of timeslots required for transmitting the first signalling message exceeds the number of timeslots available in MCCH timeslot of a frame, it reserves an extended set of uplink timeslots 33 for the mobile station. The extended set comprises the one or more timeslots of the common control channel in a defined frame and successive timeslots following the common control channel in the frame. If the resources required for transmitting the first signalling message exceed the resources of timeslots of the frame, the extended set may extend successively to timeslots of next available uplink frames of the main carrier until a resource allowing the whole message to be transmitted is reached.

As discussed earlier, frames in the main carrier successively follow one another forming a succession of frames. In the case of Figure 3 the defined frame from which the extended set of timeslots begins is in the main carrier. In the succession of frames in the main carrier, the defined frame is a specific frame from which the reserved access is expressly set to begin. Whether the defined frame is the next available uplink frame, or some later uplink frame depends on the granting delay sub-element of the slot granting element. In Figure 3 the reservation is set to start in the next uplink frame of MCCH, without restricting the arrangement to any particular granting delay. The extended set of uplink timeslots 33 comprises the MCCH timeslot 32 in the next uplink frame in the main carrier and three further timeslots following the MCCH timeslot 32 in this same uplink frame. This time the MCCH timeslot 34 of the next frame is already normally available to MCCH use.

It is immediately seen that the proposed arrangement significantly reduces the time MCCH remains unavailable for other MCCH use. The period between timeslots 20 and 26 of Fig 2 corresponds to duration of five frames, whereas the period between timeslots 30 and 34 corresponds to duration of two frames. In communications, such differences are very relevant. In addition, also the time for delivery of the first signalling message is similarly reduced. With the arrangement of Figure 3, the first signalling message is in the base station already after two frames, instead of the five frames of Figure 2.

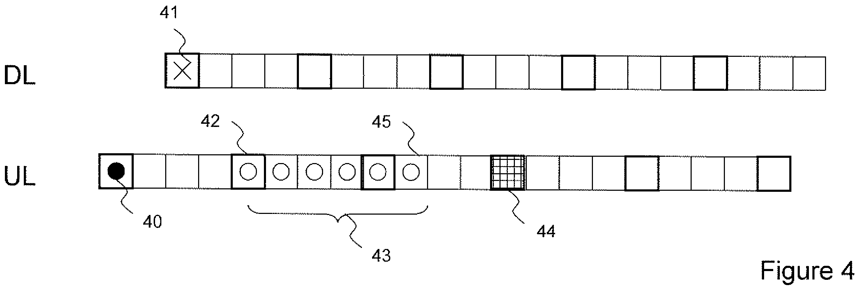

Figure 4 illustrates the enhanced arrangement for the same situation, except that that transmission of the first signalling message of the mobile station requires now additional six timeslots. Meanings of reference numbers 40 of Figure 4 are the same as the meanings of reference numbers 30 to 34 of Figure 3, correspondingly. However, in Figure 4 the capacity of the next uplink frame in the main carrier comprises the MCCH timeslot 42 and three further timeslots following the MCCH timeslot 42 in this same uplink frame. This is still not enough for transmitting the first signalling message, so the extended set of uplink timeslots 43 extends successively to MCCH and timeslot 45 of the next uplink frame of the main carrier. The reservation is thus extended to six successive timeslots of next available frames of the main carrier until a resource that allows transmission of the whole first signalling message is reached. The MCCH timeslot 44 is again normally available to other MCCH use.

The proposed arrangement in Figures 3 and 4 allows mobile stations to benefit from the advantages of one-slot MCCH but effectively avoids congestion caused by long signalling messages transmitted in MCCH.

It is noted that in a frame-based radio interfaces, one or more frames in the continuous succession of frames may be reserved for specific types of operations and are inherently not available for common control channel signalling between the mobile station and the base station. For example in TETRA radio interface, 18 frames form a multiframe of which frame 18 is a control frame that is used for broadcast and synchronisation signalling messages. The expression available frames of the main carrier thus refers here to a succession of frames in the main carrier that may carry common control channel signalling.

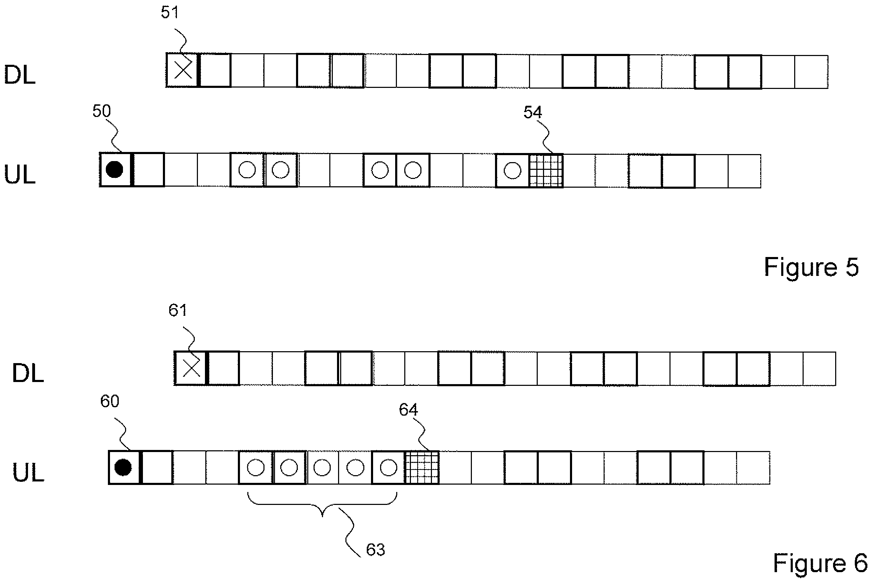

Figures 5 and 6 illustrate the proposed arrangement in a DA case where the QAM common control channel MCCH-Q length is two timeslots and the first signalling message of the mobile station requires additional five timeslots. Meanings of reference numbers 50, 51 and 54 of Figure 5 and reference numbers 60, 61 and 64 of Figure 6 are the same as the meanings of reference numbers 30, 31 and 34 of Figure 3, correspondingly. In this case all timeslots of MCCH (here: both timeslots) may be granted to the mobile station. The reserved access transmissions of the mobile station may start in the next uplink frame after the timeslot 51 that carries the slot granting element, and continue in next three frames until the second timeslot 54 of the third frame

As may be seen from Figure 5, to some extent this already reduces the period MCCH remains unavailable due to transmission of the first signalling message. With known slot granting mechanism for one-slot MCCH it would take six frames before MCCH returns back to other use after transmission of the signalling message. Due to the two-slot configuration of MCCH-Q, it becomes available to other use already after four frames. It should, anyhow, be borne in mind that the two-slot configuration already lengthens the time all mobile stations need to receive MCCH-Q transmission, so the shortening and associated reduced congestion in MCCH-Q comes with a price.

Figure 6 illustrates how this same transmission may be performed with the new enhanced arrangement. The reserved access transmissions of the mobile station may start in the next uplink frame after the downlink MCCH-Q timeslot 61 that carries the slot granting element. The extended set of uplink timeslots 63 occupies here timeslots 1 to 4 in the uplink frame and one more timeslot in the next uplink frame. The first timeslot 64 available for other common control channel signalling after transmission of the first signalling message is the second MCCH timeslot of the frame to which the fifth (last) timeslot extended. With this arrangement the period MCCH remains unavailable due to transmission of the first signalling message is still reduced in comparison to the arrangement of Figure 5. In addition it may be noted that this improved use of resources can be achieved even without necessarily applying the two-slot MCCH-Q and experiencing the disadvantages associated to it.

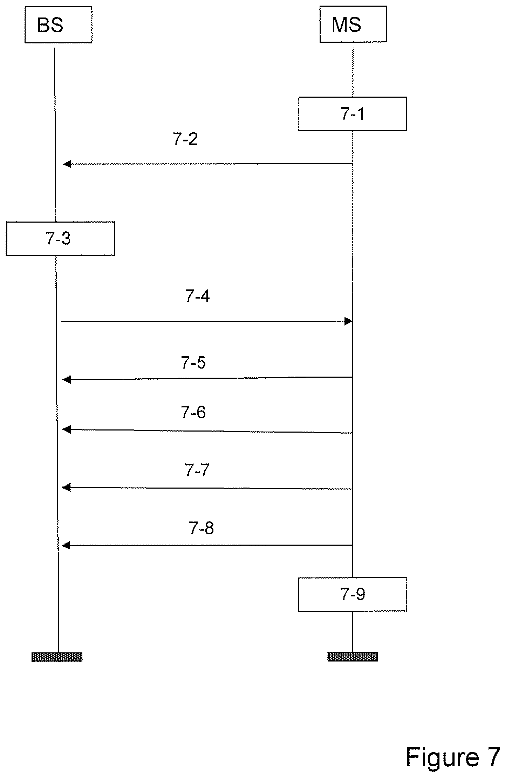

Figure 7 illustrates methods according to the arrangement of Figure 3 implemented in the base station BS and the mobile station MS. The procedure begins in a stage where MS operates in the common mode and listens to transmissions in MCCH. When it detects one or more signalling messages to be delivered to the base station over MCCH it estimates the total capacity required for these transmissions. If this amount exceeds the capacity provided by the uplink MCCH, MS generates (7-1) an initial signalling message that includes a request for reserved access and at least an estimate on the capacity of reserved access for further transmissions. In TETRA such message could be a MAC-ACCESS PDU whose reservation requirement information element indicates the number of subslots that MS, based on its estimation, requests.

MS sends (7-2) the initial signalling message in MCCH to BS that checks the amount of additional timeslots required for transmitting the one or more signalling messages in MCCH. If the amount of additional timeslots required for transmitting the one or more signalling messages exceeds the number of timeslots in MCCH, BS reserves (7-3) an extended set of timeslots for reserved access of MS. As described above, the extended set comprises the one or more timeslots dedicated for MCCH in the frame and one or more successive timeslots following MCCH in the frame. The number of successive timeslots follow the common control channel in the frame and may extend to MCCH and other timeslots of one or more available frames until the amount of reserved timeslots, matches the amount of timeslots required for transmitting the one or more signalling messages.

BS then sends (7-4) a slot granting message that grants the reserved access for the amount of reserved timeslots and indicates the availability of the extended set of uplink timeslots to MS. In TETRA the slot granting message could be a MAC-RESOURCE PDU in which the indication on the availability of the extended set of uplink timeslots may be implemented in various ways. For example, BS may set the slot granting flag and multiple slot granting flag in MAC-RESOURCE PDU to 1, and use the 'Number of slot granting sets' field of 'Multiple slot granting' information element to indicate that the slot grant corresponds to a temporarily extended set of timeslots, and the extent of the set.

Alternatively, BS may use the slot granting procedures normally to indicate the number of granted timeslots, set 'Channel allocation' flag of MAC-RESOURCE PDU to 1 and use 'Timeslot assigned' field of the 'Channel allocation element' information element to indicate the exact timeslots granted for reserved access. The 'Channel allocation element' information element comprises further unreserved flag+field combinations (e.g. 'First conditional element flag' + 'First conditional element' field) that may be used to indicate that the slot grant corresponds to a temporarily extended set of timeslots and how/when to return back to MCCH for common control channel operations. BS may optionally indicate to MS also what modulation level and coding rate the terminal could use to achieve optimal resource usage.

When MS receives the slot granting message, it transmits the one and more signalling messages in the uplink timeslots indicated by BS. Message 7-5 corresponds to transmission in timeslot 32 of Figure 3, and messages 7-6 to 7-8 a transmission in one timeslot in the successive set of timeslots 33 in the frame. When the one or more signalling messages for which the reserved access was requested are sent, MS may return to common mode and begin to listen to MCCH.

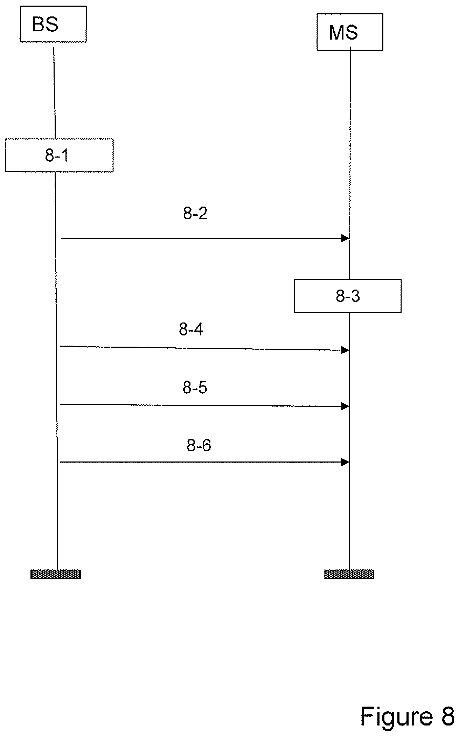

In the examples so far, the timeslots for the reserved access have been reserved from uplink frames. The invention is not, however, limited to uplink signalling. The arrangement applies equally well to common control channel signalling in the uplink and downlink directions. Figure 8 illustrates a procedure in the configuration of Figure 7, but now the base station BS has a large signalling message that it should deliver to the mobile station MS over MCCH. When BS detects the signalling message, it checks the amount of common control channel timeslots required for transmitting a signalling message to MS. If the amount of timeslots required for transmitting the signalling message exceeds the number of MCCH timeslots in a main carrier frame, BS reserves for MS an extended set of timeslots (8-1). As described above, the extended set comprises the one or more timeslots of MCCH of a frame and successive timeslots following MCCH in the frame. BS generates a resource allocation message that may also carry part of the data of the signalling message. In TETRA such resource allocation message can be, for example MAC-RESOURCE PDU. BS sends (8-2) the resource allocation message normally to MS in the common control channel timeslot. When MS receives the resource allocation message, it detects that an extended set of timeslots is temporarily taken into use. MS prepares to receive (8-3) also the reserved timeslots following MCCH in the frame as MCCH timeslots.

In the example of Figure 8, transmission of the signalling message requires resources of three additional timeslots. If MCCH is in timeslot 1 of the frame, messages 8-4, 8-5, and 8-6 illustrate transmissions of the fragments of the signalling message in timeslots 2, 3, and 4 in the same frame, correspondingly. Advantageously the resource allocation message 8-2 indicates the extent of the extended set of timeslots reserved for transmission of the signalling message (or one or more signalling messages at the same time). This allows MS to return to the normal MCCH mode right after the message is received.

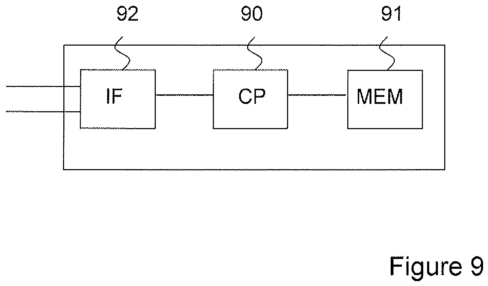

The base station and the mobile station described above represent a mobile node and a network node, which are logical communication entities and are formed as a combination of physical computing equipment and a series of coded commands that implement operations presented for these logical entities in Figures 1 to 8. In the following description these logical entities are jointly referred to as a communication apparatus. Figure 9 shows a block diagram illustrating an exemplary architecture for an embodiment of a communication apparatus, various operations of which have been described in detail above.

The communication apparatus is a special-purpose computer device that comprises a processor unit 90 for performing systematic execution of operations upon data. The processor unit 90 is an element that essentially comprises one or more arithmetic logic units, a number of special registers and control circuits. Memory unit 91, which is data medium where computer-readable data or programs, or user data can be stored, is connected to the processor unit 90. The memory unit 91 typically comprises volatile or nonvolatile memory, for example EEPROM, ROM, PROM, RAM, DRAM, SRAM, firmware, programmable logic, etc.

The device also comprises an interface unit 92 with at least one input unit for inputting data to the internal processes of the device and at least one output unit for outputting data from the internal processes of the device. If a line interface is applied, the interface unit typically comprises plug-in units acting as a gateway for delivering information from the interface unit to external connection wires and for receiving information from external connection wires to the interface unit.

If a radio or wireless interface is applied, which is the case in general with the base station, the interface unit typically comprises also a radio transceiver unit, which includes a transmitter and a receiver connected to an antenna. The radio interface is also electrically connected to the processor unit 90. The transmitter of the radio transceiver unit receives a bitstream from the processor unit 90, and converts it to a radio signal for transmission by the antenna. Correspondingly, the radio signals received by the antenna are fed to the receiver of the radio transceiver unit, which converts each radio signal into a bitstream that is forwarded for further processing to the processor unit 90. Different radio interfaces may be implemented with one radio transceiver unit, or with separate radio transceiver units which may be provided for different radio interfaces.

The interface unit 92 of the device may also comprise a user interface with a keypad, a touch screen, a microphone, and/or equals for inputting data and a screen, a touch screen, a loudspeaker, and/or equals for outputting data.

The processor unit 90, the memory unit 91, and the interface unit 92 are electrically interconnected to perform systematic execution of operations on the received and/or stored data according to the predefined, essentially programmed processes of the device. The systematic operation of these units thus provides means for the procedures, or means for performing one or more stages of the procedures, which have been described in more detail with each respective embodiment.

In general, various embodiments of the device may be implemented in hardware or special purpose circuits, software, logic or any combination thereof. Some aspects may be implemented in hardware, while some other aspects may be implemented in firmware or software, which may be executed by a controller, microprocessor or other computing device. Software routines, which are also called as program products, are articles of manufacture and can be stored in any device-readable data storage medium and they include program instructions to perform particular tasks. Thus the exemplary embodiments of this invention also provide computer program products, readable by a computer and encoding instructions for executing a process in the communication apparatus of Figure 9.

While various aspects of the invention may be illustrated and described as block diagrams, message flow diagrams, flow charts and logic flow diagrams, or using some other pictorial representation, it is well understood that the illustrated units, blocks, device, system elements, procedures and methods may be implemented in, for example, hardware, software, firmware, special purpose circuits or logic, a computing device or some combination thereof. Furthermore, it will be obvious to a person skilled in the art that, as the technology advances, the inventive concept can be implemented in various ways. The invention and its embodiments are not limited to the examples described above but may vary within the scope of the claims.

## Claims

1. A method for common control channel operation, comprising:
operating as a network node (114, 116, 118) for a communications system (100);
applying a frame-based radio interface (92) for transmitting downlink frames to a mobile node (104, 106, 108) of the communications system and for receiving corresponding uplink frames from the mobile node, a frame in the frame-based radio interface comprising a defined number of timeslots, a channel between the mobile node and the network node comprising defined one or more timeslots in uplink frames and the same defined one or more timeslots in the corresponding downlink frames, and the frame-based radio interface providing a common control channel that is available to mobile nodes under the network node or granted for reserved access of a mobile node;
checking (7-3, 8-1) the amount of common control channel timeslots required for transmitting an uplink or downlink signalling message between the network node and the mobile node;
**characterised by**
reserving (7-3, 8-1), in response to the amount of timeslots required for transmitting the signalling message exceeding the number of timeslots of the common control channel in a corresponding uplink or downlink frame, an extended set (33, 43, 63) of timeslots for the mobile node, the extended set comprising the one or more timeslots of the common control channel in the frame and one or more successive timeslots following the common control channel in the frame;
granting (7-4, 8-2) the reserved access and indicate the reservation of the extended set of timeslots to the mobile node.

2. A method according to claim 1, wherein the common control channel is in timeslots of frames transmitted in a main carrier and the extended set comprises further successive timeslots in one or more next frames of the main carrier.

3. A method according to claim 1 or 2, wherein the signalling message is an uplink signalling message, and the method comprises receiving (7-5, 7-6, 7-7, 7-8) the signalling message in the extended set of timeslots.

4. A method according to claim 1 or 2, wherein the signalling message is a downlink signalling message, and the method comprises sending (8-4, 8-5, 8-6) the signalling message in the extended set of timeslots.

5. A method according to any of claims 1 to 4, further comprising indicating (31, 41, 51, 61) the extent of the extended set of timeslots to the mobile node in a common control channel signalling message used for slot granting.

6. A communications system (100), comprising a mobile node (104, 106, 108) and a network node (114, 116, 118) and a frame-based radio interface for transferring uplink frames from the mobile node (104, 106, 108) to the network node (114, 116, 118) and corresponding downlink frames from the network node (114, 116, 118) to the mobile node (104, 106, 108), a frame in the frame-based radio interface comprising a defined number of timeslots, a channel between the mobile node (104, 106, 108) and the network node (114, 116, 118) comprising defined one or more timeslots in uplink frames and the same defined one or more timeslots in the corresponding downlink frames, and the frame-based radio interface providing a common control channel that is available to mobile nodes (104, 106, 108) under the network node (114,116,118) or granted for reserved access of a mobile node (104, 106, 108);
the network node (114, 116, 118) is configured to check the amount of common control channel timeslots required for transmitting an uplink or downlink signalling message between the network node (114, 116, 118) and the mobile node (104, 106, 108);
**characterised in that**
the network node (114, 116, 118) is configured to, in response to the amount of timeslots required for transmitting the signalling message exceeding the number of timeslots of the common control channel in a corresponding uplink or downlink frame, reserve an extended set (33, 43, 63) of timeslots for the mobile node (104, 106, 108), the extended set comprising the one or more timeslots of the common control channel in the frame and successive timeslots following the common control channel in the frame, to grant the reserved access, and indicate to the mobile node (104, 106, 108) the reservation of the extended set of timeslots; and
the mobile node (104, 106, 108) is configured to detect the reservation of the extended set (33, 43, 63) of timeslots, and to transmit a signalling message to the network node (114, 116, 118) or receive a signalling message from the network node (114, 116, 118) in the extended set of timeslots.

7. A computer program comprising program code means adapted to perform the method of any of claims 1 to 5 when the program is run on a computer device.

## Patentansprüche

1. Verfahren zum Betrieb eines gemeinsamen Steuerkanals, umfassend:
Arbeiten als ein Netzwerkknoten (114, 116, 118) für ein Kommunikationssystem (100);
Anwenden einer rahmenbasierten Funkschnittstelle (92) zum Übertragen von Downlink-Rahmen zu einem mobilen Knoten (104, 106, 108) des Kommunikationssystems und zum Empfangen entsprechender Uplink-Rahmen von dem mobilen Knoten, wobei ein Rahmen in der rahmenbasierten Funkschnittstelle eine definierte Anzahl von Zeitfenstern umfasst, wobei ein Kanal zwischen dem mobilen Knoten und dem Netzwerkknoten ein oder mehrere definierte Zeitfenster in Uplink-Rahmen und die gleichen ein oder mehreren definierten Zeitfenster in den entsprechenden Downlink-Rahmen umfasst, und wobei die rahmenbasierte Funkschnittstelle einen gemeinsamen Steuerkanal bereitstellt, der für die mobilen Knoten unter dem Netzwerkknoten verfügbar ist oder für reservierten Zugriff eines mobilen Knotens zugelassen wird;
Überprüfen (7-3, 8-1) der Menge von gemeinsamen Steuerkanalzeitfernstern, die zum Übertragen einer Uplink- oder Downlink-Signalisierungsnachricht zwischen dem Netzwerkknoten und dem mobilen Knoten benötigt wird;
**gekennzeichnet, durch**
Reservieren (7-3, 8-1), als Reaktion darauf, dass die Menge von Zeitfernstern, die zum Übertragen der Signalisierungsnachricht benötigt wird, die Anzahl der Zeitfenster des gemeinsamen Steuerkanals in einem entsprechenden Uplink- oder Downlink-Rahmen übersteigt, eines erweiterten Satzes (33, 43, 63) von Zeitfenstern für den mobilen Knoten, wobei der erweiterte Satz die ein oder mehreren Zeitfenster des gemeinsamen Steuerkanals und ein oder mehrere aufeinanderfolgende Zeitfenster, im Anschluss an den gemeinsamen Steuerkanal in dem Rahmen, umfasst;
Zulassen (7-4, 8-2) des reservierten Zugriffs und Anzeigen der Reservierung des erweiterten Satzes von Zeitfenstern zu dem mobilen Knoten.

2. Verfahren nach Anspruch 1, wobei der gemeinsame Steuerkanal in Zeitfenstern von Rahmen in einem Hauptträger übertragen wird und der erweiterte Satz weiter aufeinanderfolgende Zeitfenster in einem oder mehreren nächsten Rahmen des Hauptträgers umfasst.

3. Verfahren nach Anspruch 1 oder 2, wobei die Signalisierungsnachricht eine Uplink-Signalisierungsnachricht ist und das Verfahren Empfangen (7-5, 7-6, 7-7, 7-8) der Signalisierungsnachricht in dem erweiterten Satz von Zeitfenstern umfasst.

4. Verfahren nach Anspruch 1 oder 2, wobei die Signalisierungsnachricht eine Downlink-Signalisierungsnachricht ist und das Verfahren Senden (8-4, 8-5, 8-6) der Signalisierungsnachricht in dem erweiterten Satz von Zeitfenstern umfasst.

5. Verfahren nach einem der Ansprüche 1 bis 4, weiter umfassend Anzeigen (31, 41, 51, 61) des Inhalts des erweiterten Satzes von Zeitfenstern zu einem mobilen Knoten in einer gemeinsamen Steuerkanalsignalisierungsnachricht, die zum Zulassen eines Fensters verwendet wird.

6. Kommunikationssystem (100), umfassend einen mobilen Knoten (104, 106, 108) und einen Netzwerkknoten (114, 116, 118) und eine rahmenbasierte Funkschnittstelle zum Übertragen von Uplink-Rahmen von dem mobilen Knoten (104, 106, 108) zu dem Netzwerkknoten (114, 116, 118) und von entsprechenden Downlink-Rahmen von dem Netzwerkknoten (114, 116, 118) zu dem mobilen Knoten (104, 106, 108), wobei ein Rahmen in der rahmenbasierten Funkschnittstelle eine definierte Anzahl von Zeitfenstern umfasst, wobei ein Kanal zwischen dem mobilen Knoten (104, 106, 108) und dem Netzwerkknoten (114, 116, 118) ein oder mehrere definierte Zeitfenster in Uplink-Rahmen und die gleichen ein oder mehreren definierten Zeitfenster in den entsprechenden Downlink-Rahmen umfasst, und wobei die rahmenbasierte Funkschnittstelle einen gemeinsamen Steuerkanal bereitstellt, der für die mobilen Knoten (104, 106, 108) unter dem Netzwerkknoten (114, 116, 118) verfügbar ist oder für reservierten Zugriff eines mobilen Knotens (104, 106, 108) zugelassen wird;
wobei der Netzwerkknoten (114, 116, 118) konfiguriert ist, zum Überprüfen der Menge von gemeinsamen Steuerkanalzeitfernstern, die zum Übertragen einer Uplink- oder Downlink-Signalisierungsnachricht zwischen dem Netzwerkknoten (114, 116, 118) und dem mobilen Knoten (104, 106, 108) benötigt wird;
**dadurch gekennzeichnet, dass**
der Netzwerkknoten (114, 116, 118) konfiguriert ist, zum Reservieren, als Reaktion darauf, dass die Menge von Zeitfernstern, die zum Übertragen der Signalisierungsnachricht benötigt wird, die Anzahl der Zeitfenster des gemeinsamen Steuerkanals in einem entsprechenden Uplink- oder Downlink-Rahmen übersteigt, eines erweiterten Satzes (33, 43, 63) von Zeitfenstern für den mobilen Knoten (104, 106, 108), wobei der erweiterte Satz die ein oder mehreren Zeitfenster des gemeinsamen Steuerkanals in dem Rahmen und aufeinanderfolgende Zeitfenster, im Anschluss an den gemeinsamen Steuerkanal in dem Rahmen, umfasst, Zulassen des reservierten Zugriffs und Anzeigen der Reservierung des erweiterten Satzes von Zeitfenstern zu dem mobilen Knoten (104, 106, 108); und
der mobile Knoten (104, 106, 108) konfiguriert ist, zum Erkennen der Reservierung des erweiterten Satzes (33, 43, 63) von Zeitfenstern und Übertragen einer Signalisierungsnachricht zu dem Netzwerkknoten (114, 116, 118) oder Empfangen einer Signalisierungsnachricht von dem Netzwerkknoten (114, 116, 118) in dem erweiterten Satz von Zeitfenstern.

7. Computerprogramm, umfassend Programmcodemittel, die zum Durchführen des Verfahrens nach einem der Ansprüche 1 bis 5, wenn das Programm auf einer Computervorrichtung ausgeführt wird, angepasst sind.

## Revendications

1. Procédé de fonctionnement de canal de commande commun, comprenant :
le fonctionnement en tant que noeud réseau (114, 116, 118) pour un système de communications (100) ;
l'application d'une interface radio à base de trames (92) pour transmettre des trames en liaison descendante à un noeud mobile (104, 106, 108) du système de communications et pour recevoir des trames correspondantes en liaison montante provenant du noeud mobile, une trame dans l'interface radio à base de trames comprenant un nombre défini de créneaux horaires, un canal entre le noeud mobile et le noeud réseau comprenant un ou plusieurs créneaux horaires définis dans des trames en liaison montante et les mêmes un ou plusieurs créneaux horaires définis dans les trames correspondantes en liaison descendante, et l'interface radio à base de trames fournissant un canal de commande commun qui est accessible à des noeuds mobiles sous le noeud réseau ou auquel est octroyé un accès réservé d'un noeud mobile ;
la vérification (7-3, 8-1) de la quantité de créneaux horaires de canal de commande commun nécessaires pour transmettre un message de signalisation en liaison montante ou en liaison descendante entre le noeud réseau et le noeud mobile ;
**caractérisé par**
la réservation (7-3, 8-1), en réponse au fait que la quantité de créneaux horaires nécessaires pour transmettre le message de signalisation est supérieure au nombre de créneaux horaires du canal de commande commun dans une trame correspondante en liaison montante ou en liaison descendante, d'un ensemble étendu (33, 43, 63) de créneaux horaires pour le noeud mobile, l'ensemble étendu comprenant les uns ou plusieurs créneaux horaires du canal de commande commun dans la trame et un ou plusieurs créneaux horaires successifs suivant le canal de commande commun dans la trame ;
l'octroi (7-4, 8-2) de l'accès réservé et l'indication de la réservation de l'ensemble étendu de créneaux horaires au noeud mobile.

2. Procédé selon la revendication 1, dans lequel le canal de commande commun est dans des créneaux horaires de trames transmises dans une porteuse principale et l'ensemble étendu comprend d'autres créneaux horaires successifs dans une ou plusieurs trames suivantes de la porteuse principale.

3. Procédé selon la revendication 1 ou 2, dans lequel le message de signalisation est un message de signalisation en liaison montante, et le procédé comprend la réception (7-5, 7-6, 7-7, 7-8) du message de signalisation dans l'ensemble étendu de créneaux horaires.

4. Procédé selon la revendication 1 ou 2, dans lequel le message de signalisation est un message de signalisation en liaison descendante, et le procédé comprend l'envoi (8-4, 8-5, 8-6) du message de signalisation dans l'ensemble étendu de créneaux horaires.

5. Procédé selon l'une quelconque des revendications 1 à 4, comprenant en outre une indication (31, 41, 51, 61) de l'étendue de l'ensemble étendu de créneaux horaires au noeud mobile dans un message de signalisation de canal de commande commun utilisé pour l'octroi de créneaux.

6. Système de communications (100), comprenant un noeud mobile (104, 106, 108) et un noeud réseau (114, 116, 118) et une interface radio à base de trames pour transférer des trames en liaison montante du noeud mobile (104, 106, 108) au noeud réseau (114, 116, 118) et des trames correspondantes en liaison descendante du noeud réseau (114, 116, 118) au noeud mobile (104, 106, 108), une trame dans l'interface radio à base de trames comprenant un nombre défini de créneaux horaires, un canal entre le noeud mobile (104, 106, 108) et le noeud réseau (114, 116, 118) comprenant un ou plusieurs créneaux horaires définis dans des trames en liaison montante et les mêmes un ou plusieurs créneaux horaires définis dans les trames correspondantes en liaison descendante, et l'interface radio à base de trames fournissant un canal de commande commun qui est accessible à des noeuds mobiles (104, 106, 108) sous le noeud réseau (114, 116, 118) ou auquel est octroyé un accès réservé d'un noeud mobile (104, 106, 108);
le noeud réseau (114, 116, 118) est configuré pour vérifier la quantité de créneaux horaires de canal de commande commun nécessaires pour transmettre un message de signalisation en liaison montante ou en liaison descendante entre le noeud réseau (114, 116, 118) et le noeud mobile (104, 106, 108) ;
**caractérisé en ce que**
le noeud réseau (114, 116, 118) est configuré pour, en réponse au fait que la quantité de créneaux horaires nécessaires pour transmettre le message de signalisation est supérieure au nombre de créneaux horaires du canal de commande commun dans une trame correspondante en liaison montante ou en liaison descendante, réserver un ensemble étendu (33, 43, 63) de créneaux horaires pour le noeud mobile (104, 106, 108), l'ensemble étendu comprenant les uns ou plusieurs créneaux horaires du canal de commande commun dans la trame et des créneaux horaires successifs suivant le canal de commande commun dans la trame, pour octroyer l'accès réservé, et indiquer au noeud mobile (104, 106, 108) la réservation de l'ensemble étendu de créneaux horaires ; et
le noeud mobile (104, 106, 108) est configuré pour détecter la réservation de l'ensemble étendu (33, 43, 63) de créneaux horaires, et pour transmettre un message de signalisation au noeud réseau (114, 116, 118) ou recevoir un message de signalisation provenant du noeud réseau (114, 116, 118) dans l'ensemble étendu de créneaux horaires.

7. Programme informatique comprenant des moyens de code de programme aptes à effectuer le procédé selon l'une quelconque des revendications 1 à 5 lorsque le programme est exécuté sur un dispositif informatique.
